Europäisches Patentamt

European Patent Office

Office européen des brevets

(19)

(11) Veröffentlichungsnummer: **0 192 853 B1**

## EUROPÄISCHE PATENTSCHRIFT

(12)

(45) Veröffentlichungstag der Patentschrift: **20.02.91**

(51) Int. Cl.⁵: **H02G 11/00**, F16G 13/16, F16L 3/01

(21) Anmeldenummer: 85116413.7

(22) Anmeldetag: 21.12.85

(54) **Energieführungskette.**

(30) Priorität: 01.03.85 DE 3507200

(43) Veröffentlichungstag der Anmeldung:
03.09.86 Patentblatt 86/36

(45) Bekanntmachung des Hinweises auf die
Patenterteilung:
20.02.91 Patentblatt 91/08

(84) Benannte Vertragsstaaten:
AT CH DE FR GB IT LI SE

(56) Entgegenhaltungen:
EP-A- 0 126 862
DE-A- 2 622 006
DE-A- 3 107 045
GB-A- 1 121 178

(73) Patentinhaber: **Kabelschlepp Gesellschaft mit
beschränkter Haftung
Marienborner Strasse 75
D-5900 Siegen 1(DE)**

(72) Erfinder: **Moritz, Werner
Wetzlarerstrasse 122
D-5900 Siegen 1(DE)**

(74) Vertreter: **Patentanwälte Dipl.-Ing. Alex Stenger Dipl.-Ing. Wolfram Watzke Dipl.-Ing.
Heinz J. Ring
Kaiser-Friedrich-Ring 70
D-4000 Düsseldorf 11(DE)**

## Beschreibung

Gegenstand der Erfindung ist eine Energieführungskette für die Anordnung zwischen einem ortsfesten Anschluß und einem beweglichen Verbraucher mit einer Vielzahl von Kettengliedern, die aus einem einteilig und formstabil ausgebildeten, U-förmigen Aufnahmeteil bestehen, dessen mit einer Traverse verbundene Schenkel die Laschen der Kettenglieder bilden und mit Anschlägen zur Begrenzung des gegenseitigen Schwenkwinkels versehen sind.

Aus der DE-OS 33 18 365 ist eine Energieführungskette der vorstehend beschriebenen Gattung bekannnt, bei der jedes Kettenglied aus einem einteilig und formstabil ausgebildeten, U-förmigen Aufnahmeteil, dessen Schenkel die beiden Laschen der Kettenglieder bilden, und aus einem mit den freien Kanten der Laschen verbindbaren Schließbügel besteht, der an einer Lasche mit einem Scharnier angelenkt ist und an der anderen Lasche mit einem elastischen Haken verriegelbar ist. Diese Energieführungskette hat sich in der Praxis gut bewährt. Zum Auswechseln oder Austauschen von Energieleitungen ist es aber notwendig, alle Schließbügel einzeln zu öffnen und nachher wieder zu verschließen.

Außerdem ist aus der DE-AS 26 22 006 eine Energieführungskette mit teilbar ausgebildeten Zwischenstegen bekannt, die aus wenigstens zwei Gurten mit abgeflachtem Querschnitt und abgerundeten Schmalseiten sowie zwischen diesen angeordneten Trennstegen bestehen, die am oberen und unteren Ende mit Hinterschneidungen versehene, angeschnittene Ausnehmungen aufweisen, so daß die Gurte nach dem Einlegen in die Ausnehmungen durch Verdrehen um ihre Längsachse kraft- und formschlüssig mit den Trennstegen verspannbar sind. Bei dieser bekannten Energieführungskette sind zwischen ihren Laschen und den Zwischenstegen Klammern vorgesehen, um ein Abdeckband einziehen zu können. Wenn bei dieser bekannten Energieführungskette einzelne Energieleitungen ausgewechselt oder ausgetauscht werden sollen, müssen nach dem Entfernen eines Abdeckbandes alle Zwischenstege geöffnet und anschließend wieder geschlossen werden.

Davon ausgehend liegt der Erfindung die **Aufgabe** zugrunde, eine einfach konstruierte, geschlossene Energieführungskette zu schaffen, die zum Auswechseln oder zum Austausch der Energieleitungen schnell geöffnet und wieder geschlossen werden kann.

Als technische **Lösung** wird dafür eine Energieführungskette der eingangs beschriebenen Art vorgeschlagen, bei der an den freien Enden der Laschen nach innen vorspringende Halteelemente angeordnet und zwischen diese Halteelemente ein flexibles Abdeckband eingezogen ist, welches die Öffnungen der U-förmigen Aufnahmeteile freitragend überspannt und bei der die Halteelemente aus mit einem Schlitz versehenen Vorsprüngen bestehen, in die das Abdeckband eingreift.

Es ist aber auch möglich, daß die Halteelemente aus mit Hinterschneidungen versehenen Vorsprüngen bestehen, in die das Abdeckband mit Randwülsten eingreift.

Damit das Abdeckband sich beim bestimmungsgemäßen Gebrauch der Energieführungskette nicht in Längsrichtung aus den Halteelementen herausschieben kann, wird vorgeschlagen, am Anfang und Ende ein abnehmbares Kopfstück anzubringen, welches beispielsweise aus einem federnden Clips mit die Breite des Abdeckbandes überragenden Haltenasen besteht, die sich an den Halteelementen des ersten und letzten Kettengliedes abstützen können.

Eine nach dieser technischen Lehre ausgebildete Energieführungskette hat den **Vorteil**, daß die Abdeckbänder nach dem Entfernen des Kopfstückes an einem Ende mit einem Handgriff am anderen Ende aus der Energieführungskette herausgezogen werden können. Nach dem Auswechseln oder Austausch einzelner oder aller Energieleitungen ist es ebenfalls sehr einfach, das Abdeckband wieder in die Halteelemente einzufädeln und beim Anbringen des abgenommenen Kopfstückes wieder leicht vorzuspannen, damit es sich bei den Bewegungen der Energieführungskette nicht aus den Halteelementen ausklinken kann. Noch einfacher ist eine geschlossene und gleichwohl zu öffnende Energieführungskette kaum noch vorstellbar.

Weitere Einzelheiten und Vorteile ergeben sich aus der nachfolgenden Beschreibung eines in den Zeichnungen dargestellten Ausführungsbeispieles. In den Zeichnungen zeigen:

Fig. 1    eine Energieführungskette mit eingezogenem Abdeckband in perspektivischer Darstellung;

Fig. 2    ein Kettenglied mit eingezogenem, flachem Abdeckband in Längsrichtung gesehen;

Fig. 3    ein Kettenglied mit eingezogenem, mit Randwülsten versehenen Abdeckband in Längsrichtung gesehen;

Fig. 4    das Ende eines Abdeckbandes in Draufsicht;

Fig. 5    dasselbe Ende des Abdeckbandes in Seitenansicht;

Fig. 6    eine Anordnung mit einer zwischen einem festen Anschluß und einem beweglichen Verbraucher angeordneten Energieführungskette in Seitenansicht.

Jedes Kettenglied besteht aus einem U-förmigen Aufnahmeteil 1, dessen Schenkel als Laschen 2, 3 ausgebildet und mit einer Traverse 4 verbunden sind. Die Enden der Laschen 2, 3 sind elastisch nachgiebig ausgebildet, so daß die einzelnen Kettenglieder zu einer Gelenkkette zusammengeschoben werden können, wobei an ihrer Vorderseite angeschrägte Gelenkzapfen 5 in Gelenkbohrungen 6 einrasten. Zwischen den Laschen 2, 3 benachbarter Kettenglieder sind Anschläge 7 zur Begrenzung des gegenseitigen Schwenkwinkels angeordnet.

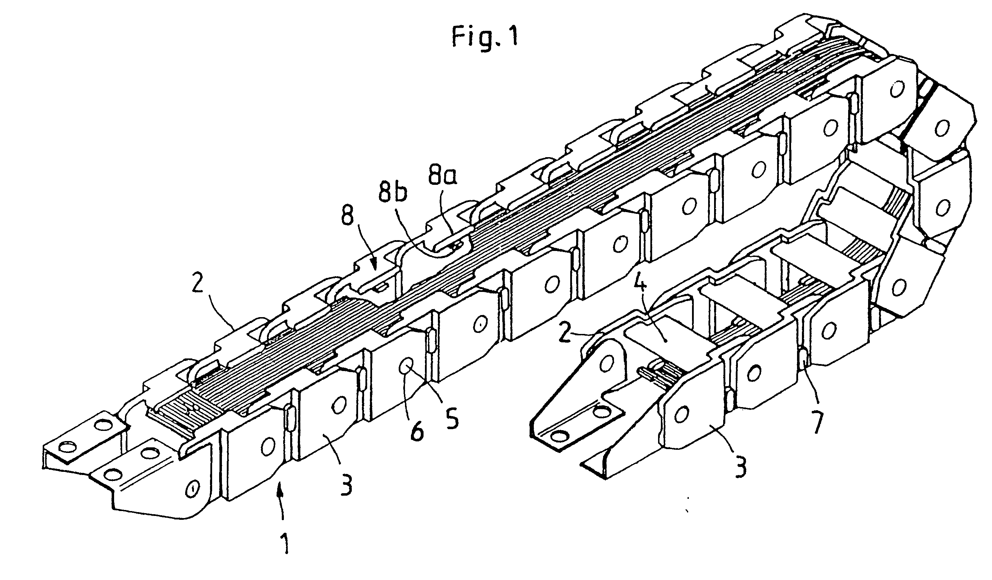

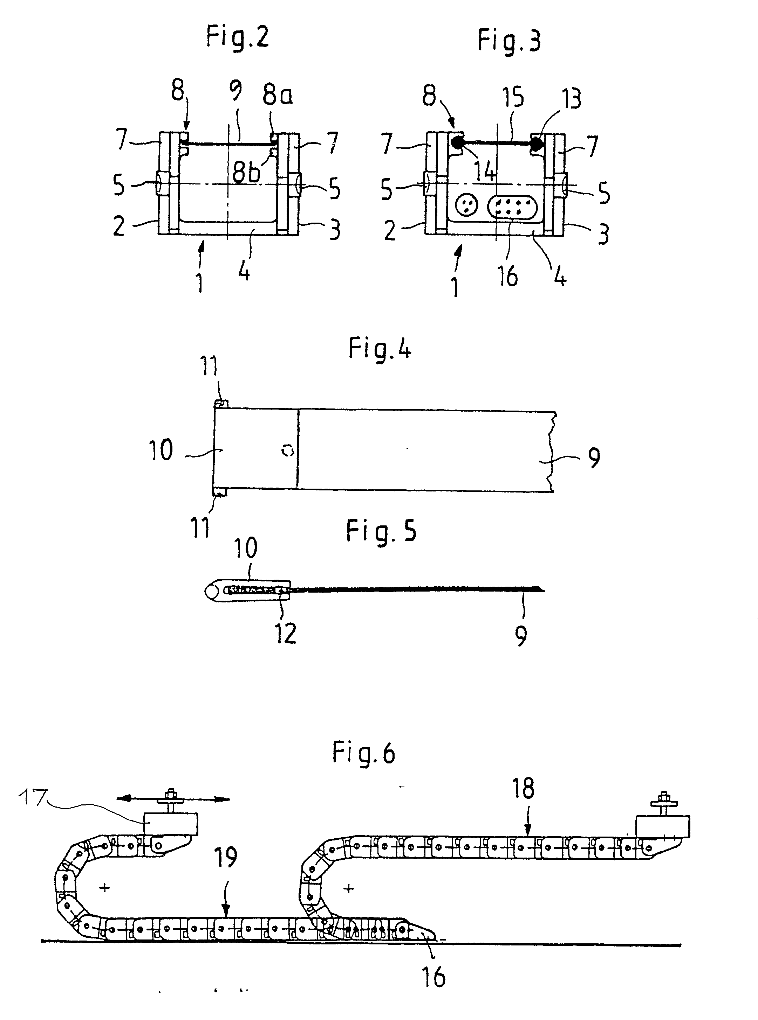

An den freien Enden der Laschen 2,3 sind nach innen vorspringende Halteelemente 8 angeordnet, die bei der in den Fig. 1 und 2 dargestellten Ausführungsform aus einer breiteren Außennase 8a und einer schmalen Innennase 8b bestehen. Auf diese Weise bilden die Halteelemente 8 zur Innenseite hin offene Schlitze, in welche ein flexibles, ebenes Abdeckband 9 aus Kunststoff oder Metall eingezogen ist.

Das Abdeckband 9 überspannt die Öffnung der Kettenglieder freitragend. Mit dem Kopfstücken wird nur das Herausrutschen des Abdeckbandes verhindert, ein Vorspannen erfolgt damit nicht. Jedes Kopfstück besteht aus einem federnden Clips mit die Breite des Abdeckbandes 9 überragenden Haltenasen 11, die sich an den Halteelementen des ersten und letzten Kettengliedes abstützen. Die Kopfstücke 10 werden mit einem Schlitz auf das Abdeckband 9 aufgeschoben und greifen mit einem einteilig angeformten Stift 12 in ein Loch im Abdeckband 9 ein.

Bei der in Fig. 3 dargestellten Ausführungsform sind die Halteelemente mit einer nach innen offenen Hinterschneidung 13 versehen, in die ein mit Randwülsten 14 versehenes Abdeckband 15 eingreift. Diese Ausführungsform wird angewendet, wenn das U-förmige Aufnahmeteil 1 lange Schenkel als Laschen 2,3 besitzt. Durch die Randwülste 14 wird ein Auseinanderfedern der Laschen 2,3 verhindert.

Bei dem in der Fig. 6 dargestellten Schema ist eine Energieführungskette zwischen einem festen Anschluß 16 und einem beweglichen Verbraucher 17, beispielsweise dem Support einer Werkzeugmaschine, angeordnet. Da die Anschläge 7 den gegenseitigen Schwenkwinkel der Kettenglieder begrenzen, kann die Energieführungskette im oberen Trum 18 freitragend ausgebildet werden und legt sich über einen vorgegebenen Krümmungsradius im unteren Trum 19 ab.

## Bezugszeichenliste

| 1 | Aufnahmeteil |
|---|---|
| 2 | Lasche |
| 3 | Lasche |
| 4 | Traverse |
| 5 | Gelenkzapfen |
| 6 | Gelenkbohrung |
| 7 | Anschlag |
| 8 | Halteelement |
| 8a | Außennase |
| 8b | Innennase |
| 9 | Abdeckband |
| 10 | Kopfstück |
| 11 | Haltenase |
| 12 | Stift |
| 13 | Hinterschneidung |
| 14 | Randwulst |
| 15 | Abdeckband |
| 16 | Anschluß |
| 17 | Verbraucher |
| 18 | Trum (oberes) |
| 19 | Trum (unteres) |

## Ansprüche

1. Energieführungskette für die Anordnung zwischen einem ortsfesten Anschluß (16) und einem beweglichen Verbraucher (17) mit einer Vielzahl von Kettengliedern, die aus einem einteilig und formstabil ausgebildeten, U-förmigen Aufnahmeteil (1) bestehen, dessen mit einer Traverse (4) verbundene Schenkel die Laschen (2, 3) der Kettenglieder bilden und mit Anschlägen (7) zur Begrenzung des gegenseitigen Schwenkwinkels versehen sind. **dadurch gekennzeichnet,**
daß an den freien Enden der Laschen (2, 3) nach innen vorspringende Halteelemente (8) angeordnet sind, daß zwischen die Halteelemente (8) ein flexibles Abdeckband (9, 15) eingezogen ist, welches die Öffnungen der Aufnahmeteile (1) freitragend überspannt und daß die Halteelemente (8) aus mit einem Schlitz versehenen Vorsprüngen bestehen, in die das Abdeckband eingreift.

2. Energieführungskette nach Anspruch 1, dadurch gekennzeichnet, daß die Halteelemente (8) aus mit Hinterschneidungen (13) versehenen Vorsprüngen bestehen, in die das Abdeckband (15) mit verdickten Randwülsten (14) eingreift.

3. Energieführungskette nach Anspruch 1, dadurch gekennzeichnet, daß an den Enden des Abdeckbandes (9,15) abnehmbare Kopfstücke (10) angeordnet sind.

4. Energieführungskette nach Anspruch 3, dadurch gekennzeichnet, daß jedes Kopfstück (10) aus einem federnden Clips mit die Breite des Abdeckbandes (9,15) überragenden Haltenasen (11) besteht.

## Claims

1. A chain link cable carrier adapted to be arranged between a stationary connection (16) and a moving load (17) and comprising a large number of chain links embodied by a unitary and dimensionally stable channel-section holder (1) whose arms are interconnected by a cross-member (4), form the link side members (2,3) and have abutments (7) to limit the angle of pivoting between individual links, characterised in that inwardly projecting retaining elements (8) are disposed at the free ends of the link side members (2, 3), a flexible cover band (9, 15) is drawn in between the retaining elements (8) and spans self-supportingly over the openings of the holders (1) and the retaining elements (8) are embodied by slotted projections in which the cover band engages.

2. A carrier according to claim 1, characterised in that the retaining elements (8) are embodied by projections which are formed with relief cuts (13) and in which the cover band (15) engages by way of thickened edge beads (14).

3. A carrier according to claikm 1, characterised in that movable end members (10) are disposed at the ends of the cover band (9, 15).

4. A carrier according to claim 3, characterised in that each end member (10) takes the form of a resilient clip having retaining members (11) which extend over the width of the cover band (9, 15).

## Revendications

1. Chaîne d'amenée d'énergie à disposer entre un raccord fixe (16) at un utilisateur mobile (17), comprenant plusieurs organes de chaîne qui se composant d'une pièce de réception en forme de U (1), constituée d'un seul tenant et de forme stable, dont les branches reliées à une traverse (4) constituent les maillons (2, 3) des organes de chaîne, et sont pourvus de butées (7) pour limiter l'angle de pivotement relatif,
   **caractérisée**

   en ce que des éléments de maintien (8) en saillie vers l'intérieur sont disposés sur les extrémités libres des maillons (2, 3).
   en ce qu'une bande de recouvrement flexible (9, 15), à cheval sur les orifices des parties de réception (1), en se supportant elle-même, est tendue entre les éléments de maintien (8) et
   en ce que les éléments de maintien (8) se composent de saillies pourvues d'une fente, dans laquelle pénètre la bande de recouvrement.

2. Chaîne d'amenée d'énergie selon la revendication 1, caractérisée en ce que les éléments de maintien (8) se composent de saillies pourvues de découpes arrière (13) dans lesquelles la bande de recouvrement (15) pénètre par des bourrelets de bords épaissis (14).

3. Chaîne d'amenée d'énergie selon la revendication 1, caractérisée en ce que des éléments de tête démontables (10) sont disposés aux extrémités de la bande de recouvrement (9, 15).

4. Chaîne d'amenée d'énergie selon la revendication 3, caractérisée en ce que chaque de tête (10) se compose d'un élément en prince formant ressort, comportant des nez de maintien (11) en saillie sur la largeur de la bande de recouvrement (9, 15).

Fig.1

EP 0 192 853 B1

Fig.2

Fig.3

Fig.4

Fig.5

Fig.6